# EUROPEAN PATENT APPLICATION

(11) **EP 0 866 595 A2**
(43) Date of publication of application: **23.09.1998**
(21) Application number: 98301746.8
(22) Date of filing: 10.03.1998
(51) Int. Cl.: H04M 3/50

(54) **Call routing in telecommunications network**

(30) Priority: 18.03.1997 GB 9705515
(71) Applicant: TELEFONAKTIEBOLAGET LM ERICSSON, 126 25 Stockholm (SE)
(72) Inventor: Ljungqvist, Per, 655 93 Karlstad (SE); Ericsson, Henrik, 657 61 Karlstad (SE)
(74) Representative: O'Connell, David Christopher

(57) **Abstract**

A method of handling a telephone call comprises receiving from a calling subscriber (3) a voice message identifying an intended called party (5). The calling subscriber (3) is identified, and a database accessed. The database is specific to the calling subscriber and contains stored data relating to voice messages, associated with the numbers of intended called parties identified thereby. The number of the intended called party is determined therefrom.

## Description

### TECHNICAL FIELD

The present invention relates to call routing in telecommunications networks.

### DESCRIPTION OF THE RELATED ART

Japanese Laid-Open Patent Application No. 57/141166 discloses a telephone exchange system for a business organisation in which the caller can place a call to the desired destination by supplying the exchange with voice commands giving specific information about that person, but not necessarily the specific telephone number. The telephone exchange holds a main database which includes records for each member of the organisation. An advantage of such system is that when a person moves around the organisation, and their telephone number changes, it is not necessary to update the telephone directory for the organisation, because the person concerned can still be contacted by way of their name and department details.

However, such a system is really only applicable to a relatively small business organisation, or one which is conveniently divided into small departments, and is not suited to more general, public telecommunications networks because, for a given name, there are likely to be many possible destinations. Thus the details that are required for a successful connection are long and fairly complex.

### SUMMARY OF THE INVENTION

It is therefore desirable to provide a system in which telecommunications customers can quickly and easily access specific destination numbers, without the need for remembering those numbers.

According to the present invention there is provided a method of handling a telephone call, comprising:
receiving from a calling subscriber a voice message identifying an intended called party;
identifying the calling subscriber;
accessing a database, which is specific to the calling subscriber, and which contains stored data relating to voice messages, associated with the numbers of intended called parties identified thereby; and
determining the number of the intended called party therefrom.

An advantage of the system in accordance with the invention is that it is only necessary, during any call, to compare a voice message from the calling party with other voice messages registered by that party. This makes the search procedure much quicker and more accurate, and allows the calling party to identify called parties in whatever form (e.g. abbreviated or familiar forms) he chooses.

### BRIEF DESCRIPTION OF THE DRAWINGS

Figure 1 shows a schematic block diagram of a telecommunications network embodying the present invention;
Figure 2 shows a block diagram of a control unit of the network of Figure 1;
Figure 3 shows a flowchart illustrating a process embodying the present invention;
Figure 4 illustrates a first database record structure; and
Figure 5 illustrates a second database record structure.

### SPECIFIC DESCRIPTION OF EMBODIMENTS OF THE INVENTION

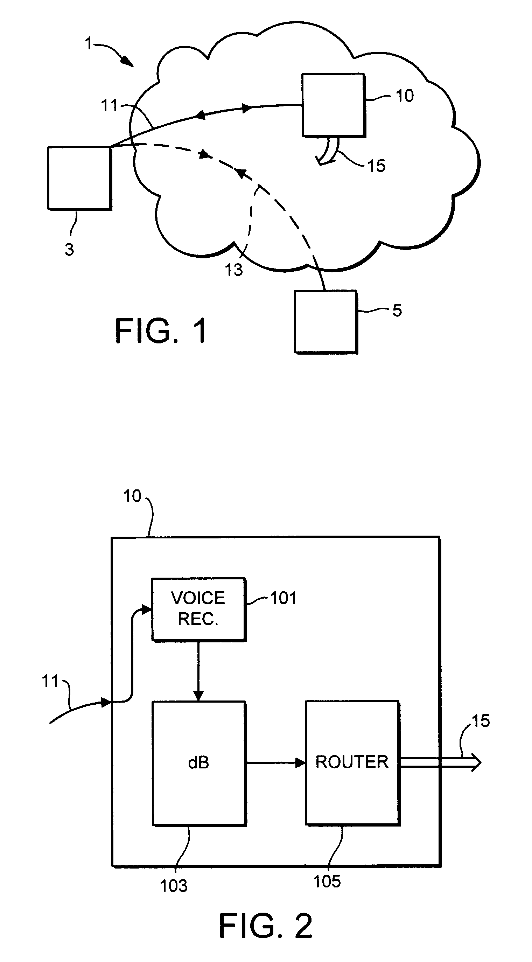

Figure 1 shows a telecommunications network 1 through which a calling party 3 can contact a called party 5 by way of a link 13 in the network 1. The link 13 is shown schematically in Figure 1, and would usually involve connections between many nodes of the network.

The network 1 is provided with a control unit 10 with which the calling party 3 communicates so that the network 1 can provide the connection 13 between the parties 3 and 5.

As shown in Figure 2, the control unit 10 includes a voice receiving unit 101, a storage means 103 and a routing unit 105. The voice receiving unit 101 receives voice information from the calling party 3 by means of the network link 11. The information obtained by the voice receiving unit is used to access the storage means 103, which in turn provides information to the routing unit 105. The routing unit 105 enables a call along link 13 to be set up in conventional fashion.

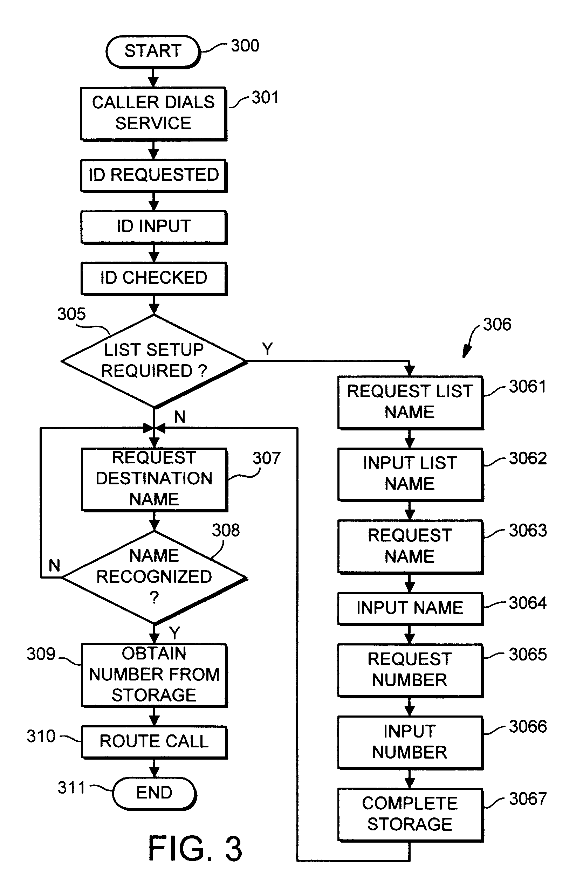

Operation of the network and control unit shown in Figures 1 and 2 will now be described in more detail with reference to Figures 3, 4 and 5.

Figure 3 shows a flowchart illustrating the steps in operation of the network 1 and starts at step 300. At step 301 a caller 3 dials the service controller 10 which responds by requesting the caller's identification, at step 302. In step 303 the identification is supplied to the control unit and is then, at step 304, checked by the control unit. If the identification is recognised, then the process moves to step 305. If the identification is now recognised, the request is rejected.

The caller's identification can be made by a voice message, by a personal identification number (PIN), or possibly automatically by the caller's telephone. In the latter case, the caller's telephone would automatically access the caller's telephone list. For example, where the caller's telephone is a mobile phone, the control unit may detect the SIM card number or identity code. Several callers may wish to use the same telephone to access their own personal telephone lists. In such a case, the number of such callers associated with a single telephone will probably be small enough to allow voice recognition to distinguish between them.

In step 305, the caller 3 is asked if a new calling list is to be set up. This routine will always be used by a first time user of the system who will need to set up a calling list before it can be used.

Steps 306 illustrate the list set up procedure. At step 3061 the system requests a list name from the caller. This list name can be any name that the caller requires so that the list can be personalised to that caller. At 3062 the list name is input by a voice command. The caller is then asked, at step 3063, for the first name in the list. This name could be for example "mother" or any other easily recalled abbreviation or familiar form of name. The name is input at step 3064 and then the caller is requested, at step 3065 to input the destination telephone number for that particular name. The system then associates the number with that name.

The caller is then asked whether more names are to be added to the list and if so steps 3063 to 3066 are repeated as many times as is necessary. When the list is completed, it is stored in the storage means and the storage process is completed.

If at step 305 new list set up is not required, or the new list set up is completed, then the process moves to step 307 in which the caller is asked for the destination name. This name will have been stored previously by the user in a personalised list and could conveniently be an abbreviation or nickname associated with the particular person to be called. The voice receiver 101 checks, at step 308 that the name is contained in the personalised list for that particular caller. If the name is not recognised, then the name is requested for a second time. If the name is consistently not recognised, then the request will be refused.

When the name is recognised, the destination telephone number is obtained from the storage means 103, and that information passed to the routing unit 105 so that the call between the caller 3 and the called party 5 can be routed through the network in conventional manner.

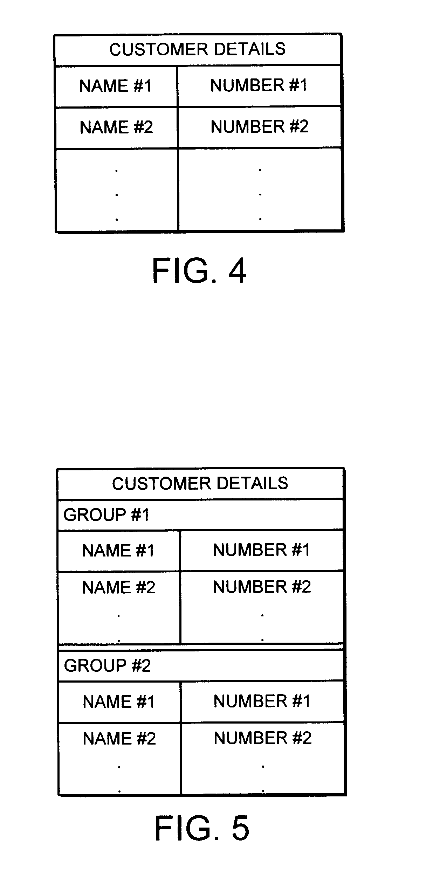

Figure 4 shows one simple, data structure for storing the individual customer is destination information. Each customer list is identified by the details of the customer and includes a series of names with corresponding numbers. As mentioned, the names can usefully be nicknames or abbreviations (for example "Bob" or "mother"). In the Figure 4 arrangement each customer has a single list.

Figure 5 shows a second data structure for the customers' lists. Once again, the whole file is identified by the individual customer details, but in the Figure 5 scheme the list is divided into a number of groups (group #1, group #2 etc.). Each group contains an individual list having a series of names with corresponding numbers. The groups are given names (for example "family" or department names). Each name and number entry within each group is the same as for the Figure 4 structure.

As will be readily appreciated, a telecommunications network employing the system of the present invention can provide a simple and convenient method for customers wishing to access the network, without the need for that customer to remember specific telephone numbers. Each customer using the network can have a personalised list of names and numbers which are accessed only by that customer. As such the amount of information required to identify the intended called destination can be reduced to a single name, or group and name, thus greatly simplifying the calling process.

## Claims

1. A method of handling a telephone call, comprising:
receiving from a calling subscriber an identifying voice message for identifying an intended called party;
receiving identity information from the calling subscriber, which information comprises a combination of a voice message and terminal identity data;
accessing a database, which is specific to the calling subscriber, and which contains stored data relating to such identifying voice messages, the data being associated with the numbers of intended called parties identified thereby; and
determining the number of the intended called party from the stored data,
the data being stored in at least one predefined storage area, each calling subscriber being able to define a plurality of such storage areas.

2. A method as claimed in claim 1, wherein the terminal identity data is stored on a personalised sim card of the calling subscriber.

3. A method as claimed in claim 1, wherein the identifying information from the calling subscriber is in the form of an identity number.

4. A method as claimed in claim 1, 2, or 3, further comprising:
routing the call to the intended called party determined.

5. A method as claimed in any one of the preceding claims, further comprising:
informing the calling subscriber of the number of the intended called party.

6. Apparatus for handling a telephone call, comprising:
a receiving unit for receiving an identifying voice message for identifying an intended called party from a calling subscriber;
identifier means receiving identity information comprising a combination of a voice message and terminal identity data, and for identifying the calling subscriber from that identity data;
retrieval means for accessing a database which is specific to the calling subscriber, and which contains stored data relating to the identifying voice messages, the data being associated with the numbers of intended called parties identified thereby; and
means for determining the number of the intended called party from data stored in the database,
the data in the database being stored in at least one predefined storage area, each calling subscriber being able to define any number of such storage areas.

7. Apparatus as claimed in claim 6, wherein the identifier means are operable to identify the calling subscriber by voice recognition.

8. Apparatus as claimed in claim 8, wherein the identifier means are operable to identify the calling subscriber by the terminal identity number thereof.

9. Apparatus as claimed in claim 8, wherein the identifier means are operable to identify the calling subscriber by a combination of voice recognition and the terminal identity number thereof.

10. Apparatus as claimed in any one of claims 6 to 9, further comprising means for routing a call to the determined called party.

11. Apparatus as claimed in any one of claims 6 to 10, further comprising means for informing the calling subscriber of the number of the intended called party.

12. A method of handling a telephone call, substantially as hereinbefore described with reference to the accompanying drawings.

13. Apparatus for handling a telephone call, substantially as hereinbefore described with reference to the accompanying drawings.
